Europäisches Patentamt

European Patent Office

Office européen des brevets

(11) Publication number: **0 105 858**
**A2**

(12) **EUROPEAN PATENT APPLICATION**

(21) Application number: **83870097.9**

(22) Date of filing: **28.09.83**

(51) Int. Cl.³: **B 65 D 8/00**

(30) Priority: **01.10.82 US 432177**

(43) Date of publication of application:
**18.04.84 Bulletin 84/16**

(84) Designated Contracting States:
**BE DE FR GB IT**

(71) Applicant: **COSDEN TECHNOLOGY INC.**
**8150 North Central Expressway North West Highway**
**Dallas Texas 75221(US)**

(72) Inventor: **Fortuna, Vincent E.**
**16412 Ladona Circle**
**Huntington Beach California 92649(US)**

(74) Representative: **Detrait, Jean-Claude**
**LABOFINA S.A. Zoning Industriel**
**B-6520 Feluy(BE)**

(54) **Container and method for manufacture.**

(57) A container and a method of manufacturing the container are disclosed which utilize spinwelding techniques to form a pedestal-base container of a thermoplastic plastic material.

FIG. 1

EP 0 105 858 A2

COS-460

## CONTAINER AND METHOD FOR MANUFACTURE

## BACKGROUND OF THE INVENTION

The present invention relates generally to thermoplastic containers and more particularly involves thermoplastic containers of the type having a pedestal base. Conventional containers made of thermoplastic materials are known in the industry. These generally utilize more or less cylindrical or conical wall sections extending frm the top to the bottom. Usually the thermoplastic containers are thermoformed in a single piece or else may be formed in a tube which then has the bottom welded or glued into place and a foil top thermosealed thereon. Generally these conventional thermoplastic containers have the base portion spinwelded inside the tubular wall section to form a relatively flat bottom end. Other conventional containers may be thermoformed in a single section to form the walls and the bottom portion and then the top portion may be thermosealed or may have a thermoplastic top spinwelded into place.

Pedestal containers currently being manufactured by conventional techniques are made in two different ways. One manner of manufacturing is to injection mold the entire container which calls for complex molding equipment. Also, in order for these to be shipped economically, the bottom or pedestal section must be made relatively small in order to allow nesting of the containers. This results in an unstable design which will cause tipping of the filled container by the consumer during use.

The other conventional method of making pedestal containers is to make them in two sections which allows nesting during shipping. Conventional joining techniques utilize glue to join the two sections. This allows a larger pedestal base to be used but results in poorly joined sections which often come apart. It also results in misaligned joints, crookedly joined base and upper sections, and unsightly excess glue runs and drips around the joint.

The present invention eliminates these disadvantages of the prior art by providing a large-base, stable pedestal container which can be shipped economically in two nested sections and then joined at the filling point utilizing an economical spin-welding technique which provides an aligned, strong, and stable joint which is also a clean joint, between the two container sections.

The present invention discloses a container having a multiple component wall and base portion comprising a generally conical wall section, a relatively flat conical bottom portion, and a conical base or pedestal section spinwelded to the container bottom. The present invention provides a very distinctive, strong, efficient container which is appealing to the eye and of a very distinctive recognizable design. The invention discloses methods for forming the container which result in a very economical manufacturing process and a relatively inexpensive yet strong, clean, and appealing final container design.

## BRIEF DESCRIPTION OF THE DRAWINGS

Figure 1 is a side elevational view of the container of this invention;

Figure 2 is a side elevational view of the upper portion of the container;

Figure 3 is a view taken at line 3-3 of Figure 2;

Figure 4 is a side elevational view of the base portion;

Figure 5 is a bottom view of the base portion;

Figure 6 is an enlarged partial cross-sectional side view of the base member of Figure 4;

Figure 7 is an enlarged side view of spinwelding lug from Figure 6;

Figure 8 is an enlarged partial cross-sectional side view of the container illustrating one method of attaching a lid thereto;

Figure 9 is an enlarged partial cross-sectional side view of a portion of the upper container body;

Figures 10 and 11 illustrate different views of a lid for the container.

## DESCRIPTION OF THE PREFERRED EMBODIMENTS

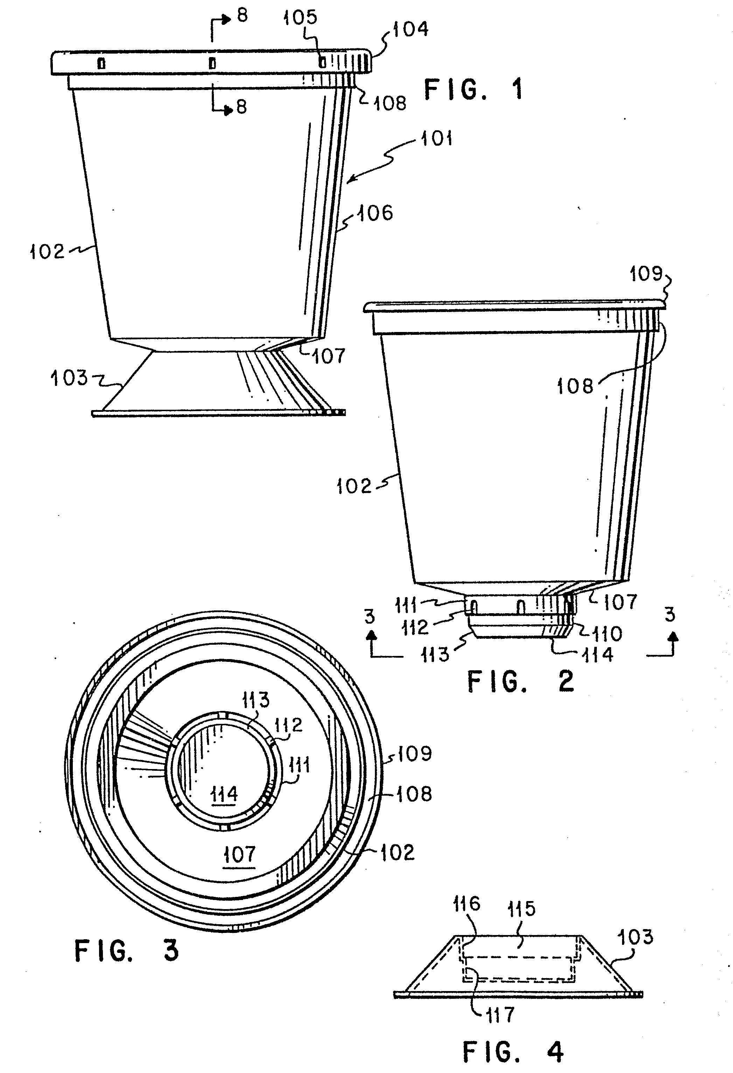

Referring to Figure 1, a side elevational view of a finished container 101 is disclosed which was manufactured according to the methods of the present invention. Container 101 generally comprises an upper container body portion 102 and a lower pedestal base 103. A lid 104 is secured to upper container part 102 by the action of locking indentations 105. Container portion 102 generally comprises a frustoconical wall section 106, a flattened frustoconical bottom panel 107, and upper lid retention collar 108. Referring now to Figure 2, the upper container body 102 is illustrated without the pedestal base 103 and the lid 104. Container body 102 comprises an upper collar 108 having a radial locking flange 109 formed peripherally thereon and extending radially outward therefrom. The lower portion of container body 102 comprises a flattened frustoconical bottom panel 107 and a downwardly extending spinwelding nipple 110. Nipple 110 comprises a lug collar section 111 having spinwelding indentations 112 formed therein and a lower projecting pilot section 113. A flat circular closure plate 114 is formed at the bottom of pilot section 113 and encloses container portion 102 at the bottom.

Figure 3 is a bottom view of container body 102 looking upward in the direction indicated by arrows 3-3 of Figure 2. In Figure 3 the circular configuration of the body portion can be more clearly seen. Each of the elements 102, 108, 107, 109, 110, 111, 113, and 114 are generally circular in nature.

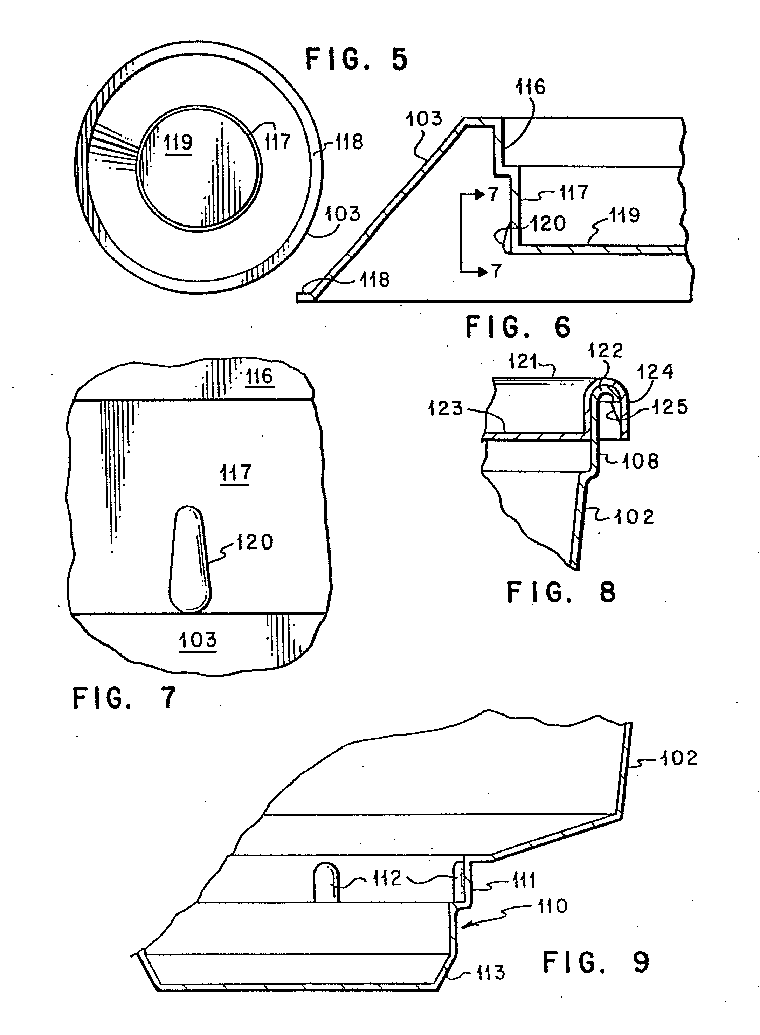

Figure 4 is a side elevational view of pedestal base 103 showing in phantom the inner area 115 formed in a complimentary configuration to the lower portion 110 of upper container body 102. Pedestal base 103 generally has a first circular opening 116 formed therein adapted for snug-fitting engagement on collar 111. Extending downward from opening 116 is a smaller circular opening 117 designed for receiving lower portion 110 of container body 102. Preferably either one or both of the openings 116, 117 will provide a tight frictional fit on sections 111 and 110. In one preferred embodiment the fit of openings 116 and 117 is arranged for interference fit on sections 110 and 111. Preferably, beveled section 113 is arranged to allow rapid engagement of nipple 110 into opening 117. Figure 5 is a bottom view of the pedestal base 103 of Figure 4. In Figure 5 base 103 has a bottom flange portion 118 and the circular section 117 has a relatively flat bottom closure section 119.

Figure 6 is an enlarged partial cross-sectional side view of pedestal base 103 showing a close-up of the receptacle areas 116 and 117, the bottom closure 117 and the spinwelding lugs or projections 120 formed on the outer wall of circular section 117. Although a single lug 120 is illustrated, several lugs could be spaced around section 119 in an equi-spaced relationship thereon for engagement by a spinwelding mandrel to securely hold pedestal base 103 during spinwelding operation with container body 102. Figure 7 is a partial side view of a spinwelding lug 120 formed on section 117.

Referring now to Figure 8 there is disclosed a preferred embodiment for a closure lid for the container 102. In this partial cross-sectional enlarged view, upper collar section 108 of container body 102 comprises a rolled flange 122 along its upper edge. Flange 122 is a 180° outwardly rolled arcuate flange formed on collar 108. A container lid 121 comprises a flat central section 123 and a U-shaped peripheral flange section 124 formed therearound. Flange section 124 has a plurality of diametrically opposed locking lugs or shoulders 125 formed therein for tight fitting engagement under roll rim 122. Lid 121 is sized such that section 123 will fit tightly and snugly within collar section 108 of container body 102. Likewise, flange 124 is provided for snug fitting engagement over roll rim 122. When lugs 125 are engaged beneath rim 122, flange 124 is very snug on rim 122.

Figure 9 is a partial cross-sectional side view of the lower portion of container body 102 illustrating the arrangement of the spinwelding indentations 112 formed in collar 111 of nipple 110.

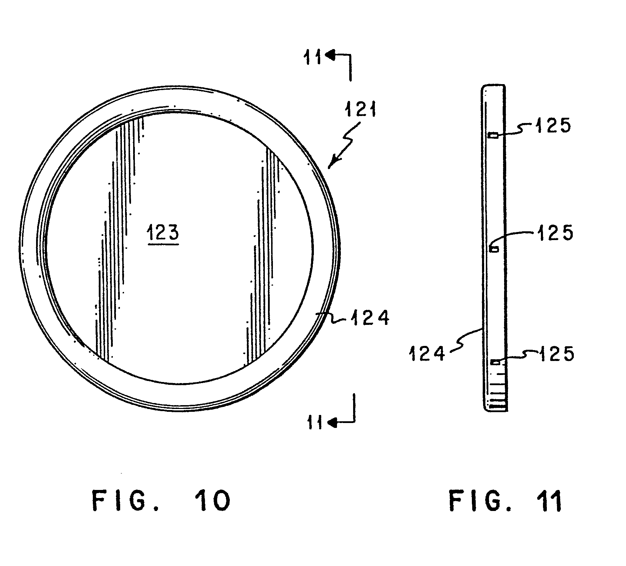

Figures 10 and 11 illustrate top and side views respectively of the container lid 121 illustrated in Figure 8. Lid 121 as illustrated in Figures 10 and 11 generally comprises a flat central portion 123 surrounded by integrally formed flange rim 124. Gripping lugs 125 are illustrated in Figure 11. Although the center section 123 is shown recessed into flange 124 for snug fitting engagement in container body 102, it is obvious that such a recess could be eliminated if desirable. In this instance center section 123 would be tangent to the arcuate curvature of flange 124 and would be at the extreme top portion rather than its illustrated recessed configuration.

Thus, the figures disclose container portions particularly suitable for forming thermoplastic pedestal based containers. In operation a container body portion 102 is secured into a spinwelder mandrel, which mandrel will have a downwardly projecting mandrel die which will engage collar section 111 and will have indentations matching those indentations 112 formed in collar 111.

Container body portion 102 thus will be secured against rotation relative to container body mandrel of the spinwelding apparatus. Likewise, a lower spinwelding mandrel will receive a pedestal base 103 and will have matching internal indentations for receiving equi-spaced lugs 120 formed in section 117. The conjunction of spinwelding lugs 120 and the indentations in the spinwelding mandrel will prevent rotation of pedestal base 103 with respect to the pedestal base spinwelding mandrel. Disclosure of the particular spinwelder apparatus is omitted since such apparatus is well known in the art and is commerically available.

After upper container body 102 and pedestal base 103 are secured by their respective lugs and indentations in their respective spinwelding mandrels, one or both of the plastic portions is rotated relative to the other portion at a predetermined spin of rotation to impart a predetermined amount of energy thereto. When the predetermined rotational speed is obtained, the parts are brought rapidly into axial engagement with nipple 110 projecting into tight-fitting engagment in circular openings 116 and 117. The friction caused by the interference fit therebetween serves to form a molten interface of thermoplastic material at the conjunction of nipple 110 and sections 116 and 117. This rapidly cools and solidifies into a single hermetically sealed friction weld joint thus securely attaching pedestal base 103 to container body 102. In one prefered embodiment the container bodies 102 and pedestal bases 103 were each thermoformed by known thermoforming techniques such as blow molding and injection molding. The materials utilized are preferably of the polyolefins and polyesters and more specifically could include polystyrene, polyethylene, polypropylene, PVC, polyethylene terephthalate, and polyethylene terephthalate glycol. Other suitable polymers which are adaptable to spinwelding techniques could be utilized for the container sections. Likewise the top portions can be formed of similar materials by similar processes to the body portion and pedestal base.

Although a specific prefered embodiment of the present invention has been desribed in the detailed description above, the description is not intended to limit the invention to the particular forms and embodiments disclosed therein since they are to be recognized as illustrative rather than restrictive and it will be obvious to those skilled in the art that the invention is not so limited. Thus the invention is declared to cover all changes and modifications of the specific example of the invention herein disclosed for purposes of illustration, which do not constitute departs from the spirit and scope of the invention.

The embodiments of the invention in which an exclusive property or privilege is claimed are defined as follows:

1. A thermoplastic container comprising a generally frustoconical upper body container portion having a generally circular cross-sectional configuration; and,
a generally frustoconical pedestal base portion having a generally circular cross-sectional configuration and comprising a thermoplastic material compatible with the material of said upper container body portion for spinwelding thereto;
said upper container body portion and said pedestal base being joined by spinwelding.

2. The container of Claim 1 wherein said upper body portion further comprises a downwardly extending circular nipple section having spinwelding lugs means formed thereon; and said pedestal base comprises an internal cylindrical opening arranged for tight-fitting engagement with said nipple portion and further containing spinwelding engagment lugs thereon.

3. The container of Claim 1 or Claim 2 wherein said container portions are made of materials selected from the group comprising polystyrene, polyvinyl chloride, polyethylene, polypropylene, polyethylene terephthalate, polyethylene terephthalate glycol, and mixtures thereof.

0105858

4. The container of claim 1 or claim 2 wherein said container portions are made of compatible materials selected from the group comprising polyolefins and polyesters.

5. A method of producing a thermoplastic container, said method comprising:

forming from a thermoplastic polymer an upper container body portion having a downwardly extending spinwelding nipple thereon;

forming a pedestal member of a thermoplastic polymer compatible with the thermoplastic polymer of said upper container body portion said pedestal base having a nipple receptacle internally located therein; and,

spinwelding said pedestal base portion to said upper container body portion at said nipple and nipple receptacle areas.

0105858

FIG. 1

FIG. 2

FIG. 3

FIG. 4

FIG. 5

FIG. 6

FIG. 7

FIG. 8

FIG. 9

0105858

FIG. 10

FIG. 11